# EUROPÄISCHE PATENTSCHRIFT

(11) **EP 0 586 723 B1**
(45) Veröffentlichungstag und Bekanntmachung des Hinweises auf die Patenterteilung: **17.05.1995**
(21) Anmeldenummer: 92115287.2
(22) Anmeldetag: 07.09.1992
(51) Int. Cl.: H02K 5/14, H01R 39/40

(54) **Geräuschgedämpfte Bürstenhalterung, insbesondere für einen Kommutator-Kleinmotor**
Brush holder with noise damping, in particular for a small commutator motor
Porte-balais à amortissement de bruit, en particulier pour un petit moteur à collecteur

(43) Veröffentlichungstag der Anmeldung: 16.03.1994
(73) Patentinhaber: SIEMENS AKTIENGESELLSCHAFT, 80333 München (DE)
(72) Erfinder: Gleixner, Ronald, Dipl.-Ing. (FH), W-8703 Ochsenfurt (DE); Pitsch, Christoph, Dipl.-Ing. (FH), W-8700 Würzburg (DE)

(56) Entgegenhaltungen:
- EP-A- 0 076 403
- DE-A- 1 613 985
- FR-A- 1 531 027
- FR-A- 2 140 491
- FR-A- 2 249 468
- FR-A- 2 441 943
- FR-A- 2 627 821

## Beschreibung

Die Erfindung bezieht sich auf eine geräuschgedämpfte Bürstenhalterung, insbesondere für einen Kommutator-Kleinmotor, gemäß Patentanspruch 1.

Durch die DE-U-81 28 614 bzw. die entsprechende EP-A1-00 76 403 ist eine geräuschgedämpfte Bürstenhalterung für einen Kommutatormotor bekannt, bei der die einzelnen, die Bürsten führenden Bürstenhülsen je für sich unter Zwischenlage einer Dämpfungsplatte auf einer Bürstenplatte befestigt sind, die weitere elektronische bzw. elektrische Bauteile aufnimmt und unmittelbar am Motorgehäuse fixiert ist. Die Bürsten sind jeweils in einem von der Normalen auf die Oberfläche des Kommutators abweichenden Anstellwinkel derart schräg gestellt, daß unter Berücksichtigung einer auf eine Kopfschräge der Bürste andrückenden Schenkelfeder und unter Berücksichtigung der betriebsmäßigen Reibungskraft zwischen der Kohlebürste und der Oberfläche des Kommutators einerseits bzw. der Andruckkraft der Schenkelfeder andererseits die Bürste unabhängig von der Drehrichtung des Kommutators über ihre gesamte radiale Länge lagekonstant an einer Seitenwand der sie aufnehmenden Bürstenhülse anliegt.

Durch die FR-A-22 49 468 oder die FR-A-26 27 821 bzw. die dazu korrespondierenden US-A-49 21 371 bzw. DE-A-39 04 844 ist es bekannt, eine Bürstenhalterplatte über Dämpfungsglieder an einem Motorlagerschild zu befestigen.

Eine insbesondere bei Kommutator-Kleinmotoren eine hohe Geräuschdämpfung besser gewährleistende und dabei einfacher fertigbare Bürstenhalterung ist durch die Lehre des Anspruchs 1 vorliegender Erfindung möglich; vorteilhafte Ausgestaltungen dieser Erfindung sind jeweils Gegenstand der Unteransprüche.

Die erfindungsgemäße Bürstenhalterung erlaubt in einfacher Weise einerseits eine eindeutige, auch bei langen Betriebsstandzeiten gewährleistete Fixierung des Bürstenkastens und damit der Bürste relativ zum Kommutator durch die von einer elastischen Dämpfungszwischenlage freie Befestigung der Bürstenkästen auf der Bürstenplatte und andererseits eine hohe Geräuscharmut bei einfachster Fertigungsmontage und guter Lagesicherung durch die geräuschdämpfende Befestigung der Bürstenplatte auf dem der festen Halterung im Motor dienenden Grundkörper.

Im Sinne einer fertigungstechnischen vorteilhaften Aufbaumontage dienen zur gegenseitigen abstandsbehafteten und geräuschdämmenden Halterung zwischen der Bürstenplatte einerseits und dem Grundkörper andererseits gegenseitige, axial verschließbare Rast- bzw. Schnappverbindungen zur Sicherung, insbesondere des axialen Abstandes, und gegenseitige axial ineinandergreifende Führungsverbindungen zur vorzugsweise gegenseitigen radialen bzw. tangentialen Ausrichtung, wobei nach einer Ausgestaltung der Erfindung die Bürstenplatte über jeweils axial einstückig angeformte seitlich elastisch verformbare Rastzapfen in korrespondierende Führungsöffnungen bzw. massive Führungszapfen in korrespondierende Führungsöffnungen des Grundkörpers unter Zwischenlage von die Rastzapfen bzw. die Führungszapfen umgreifenden Dämpfungshülsen einrastbar bzw. einsteckbar ist; die mit Durchstecköffnungen für die Rastzapfen bzw. Führungszapfen versehenen Dämpfungshülsen sind zweckmäßigerweise vormontierbar in die Rastöffnungen bzw. Führungsöffnungen einsetzbar.

Die Dämpfungshülsen wirken als axiale Abstandshalter zwischen der Bürstenplatte einerseits und dem Grundkörper andererseits, wobei durch die formschlüssige Rastverbindung zwischen der Bürstenplatte und dem Grundkörper deren axiale Beabstandung, z.B. über die Länge der Rastzapfen, bzw. durch die Anordnung der Rastmittel eine im Sinne einer bestimmten Dämpfungskonstante gezielte Vorspannung der elastischen Dämpfungshülsen auf einfache Weise einstellbar ist.

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert; darin zeigen:
- FIG 1: eine axiale bürstenplattenseitige Draufsicht auf die Bürstenhalterung mit einer Teilschnittdarstellung eines Bürstenkastens
- FIG 2: einen Detailausschnitt gemäß Schnittverlauf II-II in FIG 1

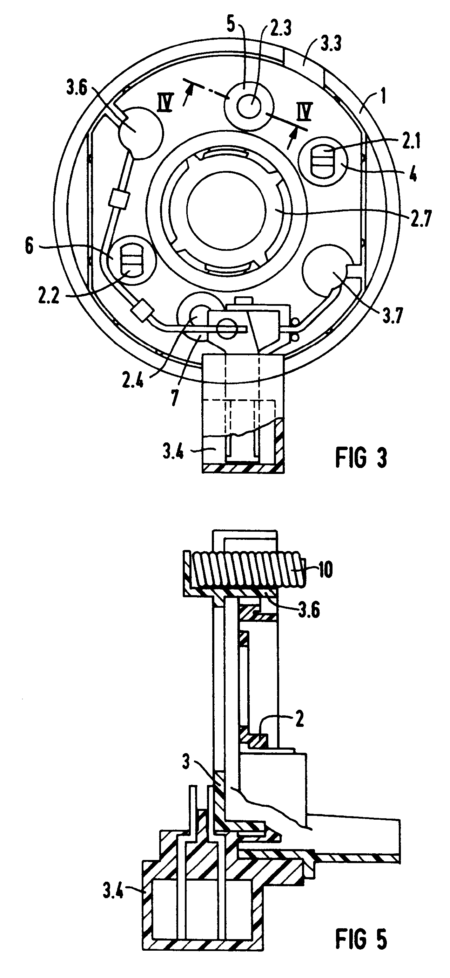

- FIG 3: eine grundkörperseitige Draufsicht auf die Bürstenhalterung mit einer Teilschnittdarstellung eines an den Grundkörper angeformten Steckergehäuses
- FIG 4: einen Detailausschnitt gemäß Schnittverlauf IV-IV in FIG 3
- FIG 5: die Bürstenhalterung im Schnittverlauf V-V in FIG 1
- FIG 6: die Schrägstellung einer Bürste im Bürstenkasten relativ zum Kommutator.

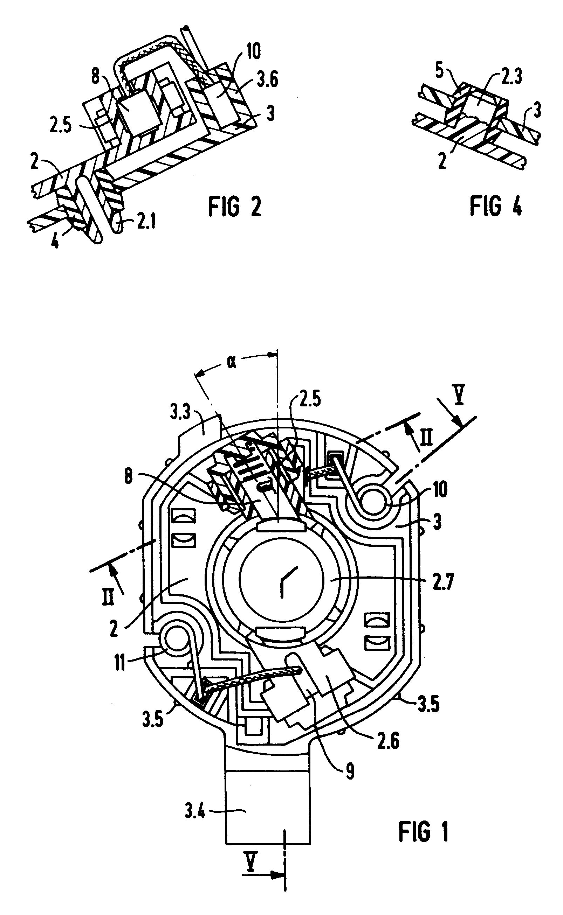

Die Bürstenhalterung besteht im wesentlichen aus zwei Bauteilen, nämlich einem im Motorgehäuse 1 fixierbaren Grundkörper 3 und einer zu dem Grundkörper 3 beabstandet über eine Dämpfungszwischenlage gehaltenen Bürstenplatte 2. Die Bürstenplatte 2 hat im wesentlichen allein die Aufgabe, die auf einem Kommutator 12 schleifenden Bürsten 8 bzw. 9 zu haltern bzw. zu führen. Dazu sind einstückig an die aus Kunststoff gespritzte Bürstenplatte 2 Bürstenkästen 2.5 bzw. 2.6 als - wie insbesondere aus dem Teilschnitt in FIG 1 ersichtlich - radial durch einen aufrastbaren Deckel nach der Einführung der Bürstenandruckfeder verschließbare, ansonsten jedoch geschlossene einstückige Bauteile der Bürstenplatte 2 ausgebildet. An die Bürstenplatte 2 ist ein ringförmiger Bürsten-Montagehalter über ausbrechbare Verbindungsstege derart angespritzt, daß die Bürsten durch Auflage auf dessen Außenumfang bei der Einführung des Kommutators zunächst hochgehalten werden und nach dem Ausbrechen und Auswerfen des Bürsten-Montagehalters durch den bei der Montage axial gegendrückenden Kommutator gegen dessen Bürstenschleiffläche durch die Bürstenandruckfeder gedrückt werden.

Zur gegenseitigen Fixierung der Bürstenplatte 2 einerseits und des Grundkörpers 3 andererseits sind an die Bürstenplatte 2 seitlich elastisch nachgiebige Rastzapfen 2.1 bzw. 2.2 angeformt, die in korrespondierende Rastöffnungen 3.1 des Grundkörpers 3 im Sinne einer axialen Aufbaumontage unter Zwischenlage von Dämpfungshülsen 4,5 einrastbar bzw. einschnappbar sind. Insbesondere zur radialen und tangentialen Ausrichtung zwischen der Bürstenplatte 2 und dem Grundkörper 3 sind weiterhin an die Bürstenplatte 2 axial vorstehende Führungszapfen 2.3 bzw. 2.4 angeformt, die in gleicher Montagetechnik in korrespondierende Führungsöffnungen 3.2 wiederum unter Zwischenlage von Dämpfungshülsen 6;7 einsteckbar sind.

In vorteilhafter Weise sind die Dämpfungshülsen 4-7 in den Rastöffnungen 3.1 bzw. Führungsöffnungen 3.2 des Grundkörpers 3 vormontierbar gehalten; dazu dienen - wie insbesondere aus FIG 2 bzw. FIG 4 ersichtlich - Hinterschneidungen an den Außenrändern der Dämpfungshülsen 4-7 in die Ränder der Rastöffnung 3.1 bzw. Führungsöffnung 3.2 einschnappen.

Der minimalste Abstand zwischen der Bürstenplatte 2 und dem Grundkörper 3 wird durch die Abstandslänge der Rastverbindung der Rastzapfen 2.1 bzw. 2.2 bestimmt; dadurch daß die Dampfungshülsen 4-7 als axiale Abstandshalter zwischen der Bürstenplatte 2 und dem Grundkörper 3 andererseits vorgesehen sind, kann durch die Wahl der Rastlänge der Rastzapfen 2.1 bzw. 2.2 eine gezielte Vorspannung der Dämpfungshülsen 4-7 im Bereich zwischen der Bürstenplatte 2 und dem Grundkörper 3 erreicht und damit eine gewünschte Dämpfungskonstante zwischen den gegenseitig ansonsten beabstandet gehaltenen Bauteilen der Bürstenplatte 2 und des Grundkörpers 3 gewährleistet werden.

Der Grundkörper 3 dient neben der eigentlichen Fixierung der gesamten Bürstenhalterung im Motorgehäuse 1 auch zur Aufnahme weiterer elektronischer bzw. elektrischer Bauteile insbesondere von in Aufnahmetaschen 3.6 bzw. 3.7 axial einsteckbarer Entstördrosseln 10 bzw. 11. Die Entstördrosseln 10 bzw. 11 sind einerseits über elektrische Anschlußleitungen mit den Bürsten 8 bzw. 9 und andererseits mit einem an den Grundkörper 3 angeformten Steckergehäuse 3.4 verbunden, das durch eine Öffnung des Motorgehäuses 1 aus diesem herausragt. Das Steckergehäuse 3.4 dient damit gleichzeitig ähnlich wie ein etwa gegenüberliegender Positioniervorsprung 3.3 zur tangentialen und axialen Fixierung des Grundkörpers 3 und damit der gesamten Bürstenhalterung relativ zum Motorgehäuse 1. Als Vorfixierung sind am äußeren Umfang des Grundkörpers mehrere Schaberippen 3.5 vorgesehen, die beim axialen Einschieben der Bürstenhalterung in das Motorgehäuse 1 eine radial formschlüssige und axial kraftschlüssige Sicherung gewährleisten.

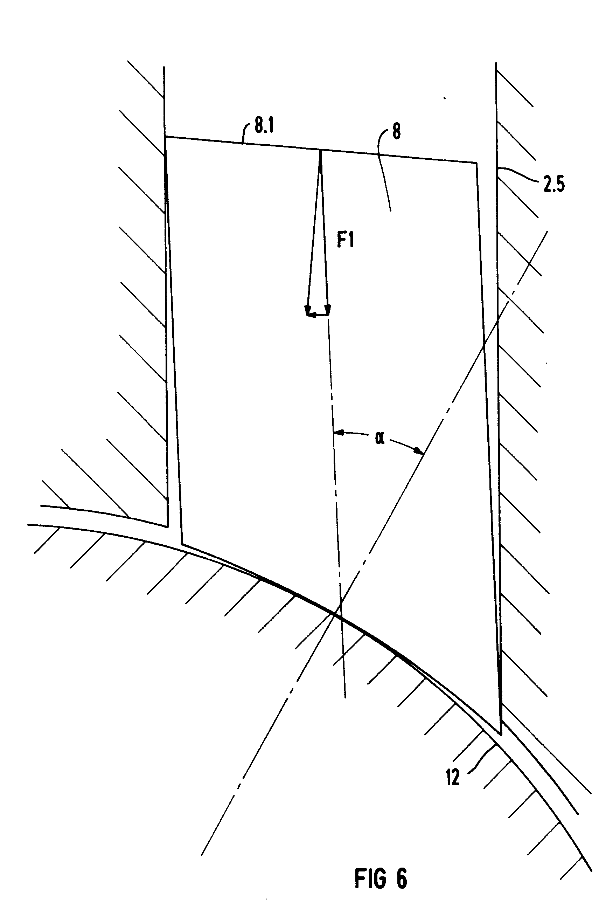

Wie insbesondere aus FIG 1 ersichtlich und in vergrößerter Darstellung in FIG 6 schematisiert, ist die Bürste zu ihrer Normalen auf die Kommutatorfläche um einen Winkel α, insbesondere von ca. 30°, derart schräggestellt und mit einer Kopfschräge 8.1 derart versehen, daß sie unter Berücksichtigung der Andruckkraft F1 einer auf die Kopfschräge 8.1 einwirkenden Bürstenandruckfeder und der Reibungskraft zwischen der Bürste 8 und dem Kommutator 12 unabhängig von der Drehrichtung des Kommutators 12 mit ihrem kommutatorseitigen Ende an der einen, rechten Seitenwand des Bürstenkastens 2.5 und mit ihrem kopfseitigen Ende an der anderen, linken Seitenwand des Bürstenkastens 2.4 lagekonstant anliegt.

## Patentansprüche

1. Geräuschgedämpfte Bürstenhalterung, insbesondere für einen Kommutator-Kleinmotor, mit den Merkmalen:
a) die Bürsten (8;9) sind unmittelbar in Bürstenkästen (2.5;2.6) auf einer Bürstenplatte (2) gehalten;
b) die Bürstenplatte (2) ist über eine Dämpfungszwischenlage (Dampfungshülsen 4-5;6-7) an einem beabstandeten, gesonderten Grundkörper (3) fixiert;
c) der Grundkörper (3) ist an einem Statorteil (Motorgehäuse 1) fest fixiert.

2. Geräuschgedämpfte Bürstenhalterung nach Anspruch 1 mit dem Merkmal:
d) die Bürstenplatte (2) bzw. der Grundkörper (3) sind durch gegenseitige, vorzugsweise axial verschließbare, Rast- bzw. Schnappverbindungen relativ zueinander, insbesondere in ihrem gegenseitigen axialen Abstand, fixierbar.

3. Geräuschgedämpfte Bürstenhalterung nach Anspruch 1 oder 2 mit dem Merkmal:
e) die Bürstenplatte (2) bzw. der Grundkörper (3) sind durch gegenseitige, vorzugsweise axial ineinandergreifende, Führungsverbindungen relativ zueinander, insbesondere in ihrer gegenseitigen radialen bzw. tangentialen Position, ausrichtbar.

4. Geräuschgedämpfte Bürstenhalterung nach Anspruch 2 bzw. 3 mit dem Merkmal:
f) die Bürstenplatte (2) ist über jeweils axial angeformte, vorzugsweise seitlich elastisch verformbare, Rastzapfen (2.1;2.2) bzw. vorzugsweise massive Führungszapfen (2.3;2.4) in korrespondierende Rastöffnungen (3.1) bzw. Führungsöffnungen (3.2) des Grundkörpers (3) unter Zwischenlage von die Rastzapfen (2.1;2.2) bzw. die Führungszapfen (2.3;2.4) umgreifenden Dämpfungshülsen (4-5;6-7) einrastbar bzw. einsteckbar.

5. Geräuschgedämpfte Bürstenhalterung nach Anspruch 4 mit dem Merkmal:
g) die mit einer Durchstecköffnung für die Rastzapfen (2.1;2.2) bzw. Führungszapfen (2.3;2.4) versehenen Dämpfungshülsen (4-5;6-7) sind vormontierbar in die Rastöffnungen (3.1) bzw. Führungsöffnungen (3.2) einsetzbar.

6. Geräuschgedämpfte Bürstenhalterung nach Anspruch 4 und/oder 5 mit dem Merkmal:
h) die Dämpfungshülsen (4-5;6-7) sind als axiale Abstandshalter zwischen der Bürstenplatte (2) einerseits und dem Grundkörper (3) andererseits vorgesehen.

7. Geräuschgedämpfte Bürstenhalterung nach einem der Ansprüche 1-6 mit dem Merkmal:
i) die Dämpfungszwischenlage (Dämpfungshülsen 4-5;6-7) ist durch die in gegeneitiger Rast- bzw. Schnappverbindung aufliegende Bürstenplatte (2) einerseits bzw. den Grundkörper (3) andererseits axial vorgespannt.

8. Geräuschgedämpfte Bürstenhalterung nach einem der Ansprüche 1-7 mit dem Merkmal:
j) der Grundkörper (3) ist zur Aufnahme von weiteren elektronischen bzw. elektrischen Bauteilen, insbesondere von Entstördrosseln (10;11) bzw. einem Steckergehäuse (3.4) vorgesehen.

9. Geräuschgedämpfte Bürstenhalterung nach einem der Ansprüche 1-8 mit dem Merkmal:
k) die in Bürstenkästen (2.5;2.6) auf der Bürstenplatte (2) mit Spiel geführten Bürsten (8;9) sind einerseits zur Oberfläche des beschliffenen Kommutators (12) derart schräg gestellt (Winkel α) und anderseits mit einer derartigen abgeschrägten, unter die Andruckkraft (F1) einer Bürstenandruckfeder gestellten Kopfschräge (8.1;9.1) versehen, daß unter Berücksichtigung der betriebsmäßigen Reibungskraft zwischen der Bürste (8;9) und der Oberfläche des Kommutators (12) einerseits bzw. der Andruckkraft (F1) der Bürstenandruckfeder andererseits die Bürste (8;9) unabhängig von der Drehrichtung des Kommutators (12) tangential lagekonstant kommutatorseitig an der einen Seitenwand ihres Bürstenkastens (2.5;2.6) und kopfseitig an der anderen Seitenwand ihres Bürstenkastens (2.5;2.6) anliegt.

10. Geräuschgedämpfte Bürstenhalterung nach Anspruch 9 mit dem Merkmal:
h) die Bürstenkästen (2.5;2.6) sind als, vorzugsweise nach Einstecken der Bürste und der Bürstenandruckfeder, radial verschließbare, ansonsten geschlossene einstückige Bauteile einer aus Kunststoff gespritzten Bürstenplatte (2) ausgebildet.

## Claims

1. Noise-damped brush holder, preferably for a small motor with a commutator, having the features:
a) the brushes (8;9) are held directly in brush boxes (2.5;2.6) on a brush plate (2);
b) the brush plate (2) is fixed via an intermediate damping layer (damping sleeves 4-5;6-7) on a separate base body (3) which is at a distance;
c) the base body (3) is firmly fixed on a stator part (motor housing 1).

2. Noise-damped brush holder according to Claim 1 having the feature:
d) the brush plate (2) and the base body (3) can be fixed relative to one another, preferably at a mutual axial distance apart, by means of mutual latching or snap-action connections which can be closed preferably axially.

3. Noise-damped brush holder according to Claim 1 or 2 having the feature:
e) the brush plate (2) and the base body (3) can be aligned relative to one another, preferably in their mutual radial or tangential position, by means of mutual guide connections which engage in one another preferably axially.

4. Noise-damped brush holder according to Claim 2 or 3 having the feature:
f) the brush plate (2) can be respectively latched or plugged into corresponding latching openings (3.1) or guide openings (3.2), respectively, in the base body (3), via latching pins (2.1;2.2) or, preferably solid, guide pins (2.3;2.4) which are integrally axially moulded and can be elastically deformed preferably laterally, with the interposition of damping sleeves (4-5;6-7) which engage around the latching pins (2.1;2.2) or the guide pins (2.3;2.4) respectively.

5. Noise-damped brush holder according to Claim 4 having the feature:
g) the damping sleeves (4-5;6-7), which are provided with an opening for the latching pins (2.1;2.2) or guide pins (2.3;2.4) respectively to be plugged through, can be inserted, in a manner such that they can be preinstalled, into the latching openings (3.1) or guide openings (3.2), respectively.

6. Noise-damped brush holder according to Claim 4 and/or 5 having the feature:
h) the damping sleeves (4-5;6-7) are provided as axial spacers between the brush plate (2) on the one side and the base body (3) on the other side.

7. Noise-damped brush holder according to one of Claims 1-6, having the feature:
i) the intermediate damping layer (damping sleeves 4-5;6-7) is axially prestressed on one side by the brush plate (2), which rests thereon with a mutual latching or snap-action connection, and on the other side by the base body (3).

8. Noise-damped brush holder according to one of Claims 1-7 having the feature:
j) the base body (3) is provided for the accommodation of further electronic or electrical components, preferably of suppression inductors (10;11) or a plug housing (3.4).

9. Noise-damped brush holder according to one of Claims 1-8 having the feature:
k) the brushes (8;9), which are guided with play in brush boxes (2.5;2.6) on the brush plate (2), are on the one hand positioned obliquely (angle α) with respect to the surface of the ground commutator (12) and on the other hand they are provided with a head incline (8.1;9.1), which is subjected to the contact-pressure force (F1) of a brush contact-pressure spring and is inclined, in such a manner that, taking into account the friction force which occurs in operation between the brush (8;9) and the surface of the commutator (12) on the one hand and the contact-pressure force (F1) of the brush contact-pressure spring on the other hand, the brush (8;9) rests tangentially in a constant position on the commutator side on one side wall of its brush box (2.5;2.6) and, on the head side, on the other side wall of its brush box (2.5;2.6), irrespective of the rotation direction of the commutator (12).

10. Noise-damped brush holder according to Claim 9 having the feature:
l) the brush boxes (2.5;2.6) are constructed as integral components which can wear radially, preferably after insertion of the brush and the brush contact-pressure spring but are otherwise closed, of a brush plate (2) which is injection moulded from plastic.

## Revendications

1. Porte-balais à amortissement du bruit, notamment pour un petit moteur à collecteur, présentant les caractéristiques suivantes :
a) les balais (8;9) sont maintenus directement dans des logements à balais (2.5; 2.6) sur une plaque (2) de support des balais;
b) la plaque (2) de support des balais est fixée, par l'intermédiaire d'une couche intercalaire d'amortissement (douilles d'amortissement 4-5; 6-7) à une embase (3) distincte se trouvant à distance ;
c) l'embase (3) est fixée fermement à une partie du stator (carcasse 1 du moteur).

2. Porte-balais à amortissement du bruit suivant la revendication 1, présentant la caractéristique suivante :
d) la plaque (2) de support des balais et l'embase (3) sont susceptibles d'être fixées l'une par rapport à l'autre, notamment en ce qui concerne leur distance axiale mutuelle, par des liaisons mutuelles à encliquetage ou à enclenchement brusque, pouvant de préférence être fermées axialement.

3. Porte-balais à amortissement du bruit suivant la revendication 1 ou 2, présentant la caractéristique suivante :
e) la plaque (2) de support des balais et l'embase (3) peuvent être orientées l'une par rapport à l'autre, notamment dans leur position mutuelle radiale ou tangentielle, par des liaisons de guidage mutuelles, qui s'emboîtent de préférence axialement.

4. Porte-balais à amortissement du bruit suivant la revendication 2 ou 3, présentant la caractéristique suivante :
f) la plaque (2) de support des balais peut être encliquetée ou enfichée, par l'intermédiaire de tétons d'encliquetage (2.1; 2.2), formées respectivement axialement par moulage et de préférence déformables latéralement de manière élastique ou par des tétons de guidage de préférence pleins (2.3; 2.4), dans des ouvertures d'encliquetage (3.1) ou des ouvertures de guidage (3.2) correspondantes du corps de base (3) avec interposition de douilles d'amortissement (4-5; 6-7), qui entourent les tétons d'encliquetage (2.1; 2.2) ou les tétons de guidage (2.3; 2.4).

5. Porte-balais à amortissement du bruit suivant la revendication 4, présentant la caractéristique suivante :
g) les douilles d'amortissement (4-5; 6-7), qui sont pourvues d'une ouverture d'enfichage pour les tétons d'encliquetage (2.1; 2.2) ou pour les tétons de guidage (2.3; 2.4), peuvent être insérées, en pouvant être préassemblées, dans les ouvertures d'encliquetage (3.1) ou dans les ouvertures de guidage (3.2).

6. Porte-balais à amortissement du bruit suivant la revendication 4 et/ou 5, présentant la caractéristique suivante :
h) les douilles d'amortissement (4-5; 6-7) sont prévues sous la forme d'entretoises axiales entre la plaque (2) de support des balais, d'une part, et l'embase (3), d'autre part.

7. Porte-balais à amortissement du bruit suivant l'une des revendications 1 à 6, présentant la caractéristique suivante :
i) la couche intercalaire d'amortissement (douilles d'amortissement 4-5; 6-7) est précontrainte axialement par la plaque (2) de support des balais, qui prend appui par une liaison mutuelle d'encliquetage ou d'enclenchement brusque, d'une part, et par l'embase (3), d'autre part.

8. Porte-balais à amortissement du bruit suivant l'une des revendications 1-7, présentant la caractéristique suivante :
j) l'embase (3) est destinée à loger d'autres composants électroniques ou électriques, notamment des bobines d'antiparasitage (10;11) ou un boîtier (3.4) du connecteur.

9. Porte-balais à amortissement du bruit suivant à l'une des revendications 1 à 8, présentant la caractéristique suivante :
k) les balais (8;9), qui sont guidés avec jeu dans des logements à balais (2.5; 2.6) sur la plaque (2) de support des balais, d'une part, sont inclinés (angle a) par rapport à la surface du collecteur poli (12) et, d'autre part, sont équipés d'un biseau de tête (8.1; 9.1) qui est soumis à la force de serrage (F1) d'un ressort de serrage des balais et est incliné de telle sorte que, compte tenu de la force de frottement en fonctionnement entre le balai (8;9) et la surface du collecteur (12), d'une part, et compte tenu de la force de serrage (F1) du ressort de serrage du balai, d'autre part, le balai (8;9) s'applique, indépendamment du sens de rotation du collecteur (12) tangentiellement et dans une position constante, contre une paroi latérale de son logement à balai (2.5; 2.6), côté collecteur, et sur l'autre paroi latérale de son logement à balai (2.5; 2.6), du côté de la tête.

10. Porte-balais à amortissement du bruit suivant la revendication 9, présentant la caractéristique suivante :
h) les logements à balais (2.5; 2.6) sont agencés sous la forme d'éléments monoblocs, qui peuvent être fermés radialement de préférence après l'enfichage du balai et du ressort de serrage du balai, et ils sont fermés, par ailleurs, par une plaque (2) de support des balais, en une matière plastique moulée par injection.
